(19) Europäisches Patentamt / European Patent Office / Office européen des brevets

(11) **EP 3 069 321 B1**

(12) **FASCICULE DE BREVET EUROPEEN**

(45) Date de publication et mention de la délivrance du brevet:
**01.01.2020 Bulletin 2020/01**

(21) Numéro de dépôt: **14806040.3**

(22) Date de dépôt: **07.11.2014**

(51) Int Cl.:
*G06T 7/45* $^{(2017.01)}$ *G06T 7/48* $^{(2017.01)}$

(86) Numéro de dépôt international:
**PCT/FR2014/052858**

(87) Numéro de publication internationale:
**WO 2015/071579 (21.05.2015 Gazette 2015/20)**

(54) **PROCÉDÉ DE CARACTÉRISATION AUTOMATIQUE DE LA TEXTURE D'UNE IMAGE NUMÉRIQUE**

VERFAHREN ZUR AUTOMATISCHEN CHARAKTERISIERUNG DER TEXTUR EINES DIGITALEN BILDES

METHOD OF AUTOMATIC CHARACTERIZATION OF THE TEXTURE OF A DIGITAL IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.11.2013 FR 1361075**

(43) Date de publication de la demande:
**21.09.2016 Bulletin 2016/38**

(73) Titulaires:
- **Université d'Aix Marseille**
  **13007 Marseille 7 (FR)**
- **Centre National de la Recherche Scientifique (C.N.R.S.)**
  **75016 Paris (FR)**

(72) Inventeur: **RICHARD, Frédéric Joseph Pierre**
**F-13012 Marseille (FR)**

(74) Mandataire: **Colombo, Michel**
**Innovation Competence Group**
**310, avenue Berthelot**
**69372 Lyon Cedex 08 (FR)**

(56) Documents cités:
**US-A- 5 859 919**

- XU Y ET AL: "MDCT-Based 3-D Texture Classification of Emphysema and Early Smoking Related Lung Pathologies", IEEE TRANSACTIONS ON MEDICAL IMAGING, IEEE SERVICE CENTER, PISCATAWAY, NJ, US, vol. 25, no. 4, 1 avril 2006 (2006-04-01), pages 464-475, XP001545785, ISSN: 0278-0062, DOI: 10.1109/TMI.2006.870889
- RENUKA UPPALURI ET AL: "Fractal analysis of high-resolution CT images as a tool for quantification of lung diseases", PROCEEDINGS OF SPIE, vol. 2433, 24 mai 1995 (1995-05-24), pages 133-142, XP055130406, ISSN: 0277-786X, DOI: 10.1117/12.209685
- CHI-CHANG CHEN ET AL: "FRACTAL FEATURE ANALYSIS AND CLASSIFICATION IN MEDICAL IMAGING", IEEE TRANSACTIONS ON MEDICAL IMAGING, IEEE SERVICE CENTER, PISCATAWAY, NJ, US, vol. 8, no. 2, 1 juin 1989 (1989-06-01), pages 133-142, XP000120831, ISSN: 0278-0062, DOI: 10.1109/42.24861
- CHANDRASEKHAR R ET AL: "Texture analysis of mammograms using the two-dimensional Hurst operator", DIGITAL SIGNAL PROCESSING PROCEEDINGS, 1997. DSP 97., 1997 13TH INTERN ATIONAL CONFERENCE ON SANTORINI, GREECE 2-4 JULY 1997, NEW YORK, NY, USA,IEEE, US, vol. 1, 2 juillet 1997 (1997-07-02), pages 97-100, XP010251025, DOI: 10.1109/ICDSP.1997.627977 ISBN: 978-0-7803-4137-1

**EP 3 069 321 B1**

## Description

L'invention concerne un procédé de caractérisation automatique de la texture d'une image numérique. L'invention concerne également un support d'enregistrement d'informations et un calculateur électronique pour la mise en œuvre de ce procédé. L'invention concerne enfin un procédé de classement automatique d'images numériques en fonction de leur texture.

On connaît de nombreuses façons de caractériser statistiquement la texture d'une image numérique, pour des applications dans le domaine du traitement d'images. Par exemple, la texture peut être caractérisée statistiquement au moyen d'un indice mathématique connu sous le nom d'exposant de Hurst (également connu sous les noms de coefficient ou d'indice de Hurst). Cet exposant de Hurst est par exemple défini, dans le cadre d'un modèle anisotrope, par Grace Chan et Andrew Wood dans leur article « Increment-based estimators of fractal dimension for two-dimensional surface data », Statistica Sinica, vol. 10 p. 343-376, 2000. Dans cet article, un exposant de Hurst est calculé sur la totalité d'une image numérique pour caractériser la texture de cette image. Ce calcul est réalisé au moyen d'une méthode mathématique de variations quadratiques.

Une limitation de ce procédé est qu'il ne tient pas convenablement compte des fluctuations de régularité de la texture de l'image numérique à l'échelle locale. La texture à l'échelle globale de l'image est estimée, sans tenir compte de ces fluctuations. Il en résulte une caractérisation imprécise de la texture de l'image, notamment lorsque cette texture présente localement une inhomogénéité importante.

De l'état de la technique est également connu des documents suivants :

- Xu Y. et al, « MDCT-based 3D texture classification of emphysema and early smoking related lung pathologies », IEEE Trans. on Médical Imaging, vol. 25, p.464-475, avril 2006 ;
- Renuka Uppaluri et al., « Fractal analysis of high-resolution CT images as a tool for quantification of lung diseases », Proc. of SPIE, vol. 2433, p. 133-142, mai 1995 ;
- Chi-Chang Chen et al, « Fractal feature analsis and classification in médical imaging », IEEE Transactions on Médical Imaging, vol. 8, n. 2, p. 133-142, 1989;
- Chandrasekhar R. et al, « Texture analysis of mammograms using the two-dimensional Hurst operator », Digital Signal Processing Proceedings, vol. 1, p. 97-100, IEEE, juillet 1977 ;
- US5859919A (Holland Orgal T et al).

Il existe donc un besoin pour un procédé de caractérisation de la texture d'une image qui remédie à ces inconvénients.

L'invention concerne donc un procédé de caractérisation automatique de la texture d'une image numérique conforme à la revendication 1.

En calculant la signature à partir des exposants de Hurst $H_i$ que l'on combine entre eux, on obtient en résultat une signature plus précise car tenant compte des fluctuations locales de la texture de l'image.

Les modes de réalisation de l'invention peuvent présenter une ou plusieurs des caractéristiques des revendications 2 à 7.

Ces modes de réalisation présentent en outre les avantages suivants :

- la combinaison des exposants $H_i$ à l'aide d'une matrice de cooccurrence permet de tenir compte de la position relative des fenêtres d'analyse pour lesquelles chacun des exposants $H_i$ sont estimés et donc des couplages qui peuvent exister entre des fenêtres d'analyse distantes l'une des autres.
- l'utilisation des paramètres de Haralick plutôt que de la matrice de cooccurrence elle-même permet de faciliter l'implémentation du procédé, car ces paramètres sont plus aisés à manier que la matrice. En effet, la matrice de cooccurrence calculée pour une image donnée présente typiquement des dimensions importantes.
- les moments statistiques sont plus simples et rapides à calculer que la matrice de cooccurrence.
- en choisissant une taille identique pour toutes les fenêtres d'analyse, le calcul de la signature est facilité. En effet, si toutes les fenêtres n'ont pas la même taille, cela peut biaiser la variance de paramètres statistiques de l'image. Il est alors nécessaire d'ajouter une étape de correction des exposants $H_i$ estimés pour compenser cette variance, ce qui complique le procédé ;
- la construction de la signature à partir des erreurs locales et globale permet d'obtenir une précision accrue.

Selon un autre aspect, l'invention concerne également un procédé de classement automatique d'images numériques en fonction de leur texture, conforme à la revendication 8.

Selon un autre aspect, l'invention concerne également un support d'enregistrement d'informations comportant des instructions pour l'exécution d'un procédé conforme à l'invention lorsque ces instructions sont exécutées par un calculateur électronique.

Selon un autre aspect, l'invention concerne également un calculateur électronique pour la mise en œuvre d'un procédé conforme à l'invention, ce calculateur étant conforme à la revendication 10.

L'invention sera mieux comprise à la lecture de la description qui va suivre, donnée uniquement à titre d'exemple non limitatif et faite en se référant aux dessins sur lesquels :

- la figure 1 est une illustration schématique d'un dispositif pour caractériser automatiquement la texture d'une image numérique ;

- la figure 2 est une illustration schématique d'une image numérique apte à être acquise par le dispositif de la figure 1 ;
- la figure 3 est un organigramme d'un procédé de caractérisation de la texture d'une image numérique au moyen du dispositif de la figure 1 ;
- les figures 4A et 4B sont des illustrations schématiques de deux fenêtres d'analyse définies chacune pour une portion de l'image numérique de la figure 2 ;
- la figure 5 est une illustration schématique d'un masque utilisé pour estimer l'exposant de Hurst $H_i$ d'une portion de l'image numérique contenue dans une fenêtre d'analyse de la figure 4A ou 4B ;
- la figure 6 est un organigramme d'un procédé de classement d'images numériques en fonction de leur texture, déterminée au moyen du procédé de la figure 3.

Dans ces figures, les mêmes références sont utilisées pour désigner les mêmes éléments.

Dans la suite de cette description, les caractéristiques et fonctions bien connues de l'homme du métier ne sont pas décrites en détails.

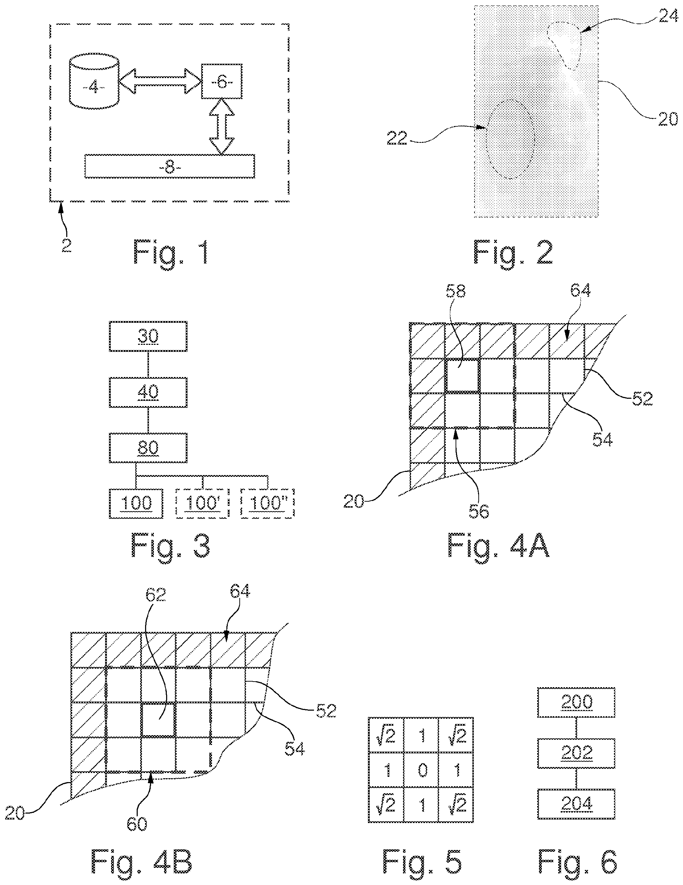

La figure 1 représente un dispositif 2 de caractérisation de la texture d'une image numérique. Le dispositif 2 est configuré pour caractériser la texture d'une image numérique. Plus précisément, le dispositif 2 est configuré pour fournir, pour une image numérique donnée, une signature qui caractérise la texture de cette image numérique. Cette signature se présente ici sous la forme d'une unique valeur numérique. La nature de cette signature sera précisée plus en détail dans ce qui suit.

A cet effet, le dispositif 2 comporte :

- un support 4 d'enregistrement d'informations ;
- un calculateur 6 électronique programmable ;
- une interface 8 d'échange de données.

L'interface 8 est configurée pour acquérir une image numérique. Le calculateur 6 est programmé pour exécuter des instructions enregistrées dans le support 4. Le support 4 comporte notamment des instructions pour l'exécution du procédé de caractérisation de la figure 3 et du procédé de classification de la figure 6.

La « texture » d'une image numérique est généralement considérée comme étant la distribution spatiale de variations d'intensité et/ou de variations tonales des pixels formant l'image numérique. La texture est par exemple définie à la section « I. Introduction » de l'article de Robert M. Haralick et al ; « Textural features for image classification » ; IEEE Transactions on Systems, Man and Cybernetics ; vol. SMC-3, n°6, p. 610-621, novembre 1973.

Dans cette description, la texture est définie suivant une approche stochastique. L'image numérique est modélisée comme étant la réalisation statistique d'un champ aléatoire, en utilisant comme modèle mathématique une extension du modèle des champs browniens aléatoires (« fractional Brownian fields » en langue anglaise), par exemple telle que décrite dans l'article de A. Bonami et al. ; « Anisotropic analysis of some gaussian models » ; Journal of Fourier Analysis and Applications ; vol. 9 ; p. 215-213 ; Springer, 2003 ; DOI : 10.1007/s00041-003-0012-2.

Le dispositif 2 est notamment programmé pour déterminer une signature globale d'une image numérique en combinant une pluralité de coefficients de Hurst estimés localement en divers emplacements sur cette image. Par exemple, le dispositif 2 est programmé pour définir une pluralité de fenêtres d'analyse sur une image numérique acquise, puis pour estimer un exposant de Hurst pour chaque fenêtre d'analyse ainsi définie. On note $H_i$ l'exposant de Hurst estimé pour la fenêtre indexée par l'indice i, où i est un entier naturel non nul. Chaque indice i identifie de façon unique une fenêtre d'analyse de l'image numérique. L'exposant de Hurst est par exemple défini, dans le cadre d'un modèle mathématique d'image multifractal « fractional brownian fields », comme étant un exposant de Holder critique du champ brownien. L'exposant de Hurst apporte donc une mesure de la régularité de l'image. La valeur de $H_i$ est ici comprise dans l'intervalle [0;1]. En pratique, ici, la valeur de l'exposant $H_i$ est estimée au moyen d'un estimateur statistique.

Dans cet exemple, le dispositif 2 est programmé de façon à ce que la combinaison des exposants $H_i$ comporte le calcul d'une matrice de co-occurence de valeurs de ces exposants $H_i$. La signature est ici un paramètre de Haralick de cette matrice de cooccurrence. Les paramètres de Haralick sont par exemple définis dans l'annexe I de l'article de Robert M. Haralick et al. précédemment cité. Ces notions seront définies plus en détail dans ce qui suit en référence à l'organigramme de la figure 3.

La figure 2 représente un exemple d'une image numérique 20 dont on souhaite caractériser la texture, au moyen du dispositif 2. De façon connue, l'image 20 est formée d'une pluralité de pixels. L'image 20 est apte à être stockée sur un support d'enregistrement d'informations. L'image 20 est ici (par exemple) un cliché d'un tissu biologique obtenu lors d'une mammographie. Cette image est ici encodée en niveaux de gris. Chaque pixel de l'image 20 présente donc une valeur numérique entière non nulle codant son intensité lumineuse. Cette valeur numérique sera par la suite nommée « intensité de pixel ». Par exemple, les intensités de pixels de l'image 20 sont comprises entre 0 et $2^{16}$, la valeur 0 correspondant à une intensité nulle et la valeur $2^{16}$ correspondant à une intensité maximale. L'image 20 présente ici une forme plane rectangulaire, avec des dimensions d'environ 2000 pixels par 3000 pixels. L'image 20 est ici un fichier informatique encodé au format DICOM (« Digital imaging and communications in medicine » en langue anglaise).

Dans cette description, une caractéristique de l'image sera dite « globale » si elle s'applique à la totalité de l'image, tandis qu'elle sera dite « locale » si elle ne s'applique qu'à une portion de dimensions réduites de l'image. On dira d'une portion de l'image 20 qu'elle présente des dimensions réduites si sa superficie est inférieure à 10 % ou à 5 % ou à 1 % ou à 0,5 % à la superficie de l'image 20.

L'image 20 présente ici des motifs formés de zones 22 de faible intensité, dites sombres et de zones 24 d'intensité élevée, dites claires.

Dans cet exemple, la texture de l'image donne une information sur la probabilité que le tissu biologique qui a fait l'objet de la mammographie développe une tumeur cancéreuse.

Un exemple du fonctionnement du dispositif 2 pour caractériser la texture de l'image 20 va maintenant être décrit, en référence à l'organigramme de la figure 3 et à l'aide des figures 1, 2, 4A, 4B et 5.

D'abord, lors d'une étape 30, l'image 20 est acquise par le dispositif 2, par exemple au moyen de l'interface 8. Avantageusement, un traitement d'image préalable est appliqué sur l'image 20 acquise, pour en éliminer certains éléments parasites, par exemple qui ne correspondent pas au tissu biologique et se focaliser sur une région d'intérêt constituée de tissus biologiques. Ici, toute l'image 20 correspond à une région d'intérêt.

Ensuite, lors d'une étape 40, une pluralité de fenêtres d'analyse, ou fenêtres, sont définies pour l'image 20. Chaque fenêtre d'analyse est une portion de l'image 20 et est formée de pixels de cette image 20.

Ici, les fenêtres d'analyse sont définies de façon à ce que toute l'image 20 comporte des fenêtres d'analyse, c'est-à-dire que les pixels de l'image 20 contenus à l'intérieur d'une ou plusieurs des fenêtres d'analyse définies représentent au moins 90 % ou 95 % ou 99 % de tous les pixels de l'image numérique.

Dans cet exemple, les fenêtres d'analyse définies se chevauchent les unes avec les autres, c'est-à-dire que deux fenêtres immédiatement voisines l'une de l'autre présentent au moins un pixel en commun. De plus, ici, ces fenêtres sont uniformément réparties sur la surface de l'image 20.

Les fenêtres présentent ici une forme carrée. Les dimensions des fenêtres sont ici choisies en fonction de la façon dont les exposants $H_i$ seront estimés ultérieurement. La longueur du côté de chaque fenêtre est ici supérieure ou égale à trois pixels ou à cinq pixels et, de préférence, supérieure ou égale à 15 ou à 20 pixels. Cette longueur est ici inférieure ou égale à 50 pixels ou à 40 pixels. De préférence, cette longueur est comprise entre 25 et 35 pixels. Les fenêtres sont ici choisies toutes de forme et de dimensions identiques.

Ces dimensions permettent d'obtenir un compromis satisfaisant entre les exigences de localité et de précision. En effet, des dimensions élevées permettent d'estimer l'exposant $H_i$ avec une meilleure précision, mais en perdant de l'information sur les fluctuations de texture de l'image 20 à l'échelle locale. Au contraire, des dimensions réduites permettent de mieux rendre compte de fluctuations locales de la texture, mais au détriment de la précision.

Avantageusement, les pixels situés près des bordures de l'image 20 ne sont pas pris en compte, afin d'éviter des effets de bords qui pourraient perturber l'estimation des exposants $H_i$. Par la suite, on ne tiendra pas compte de ces pixels pour définir les fenêtres d'analyse.

Les figures 4A et 4B représentent plus en détail des exemples de fenêtres d'analyses sur une partie de l'image 20. Pour simplifier les figures 4A et 4B, seule une fenêtre d'analyse est dessinée à chaque fois. Les figures 4A et 4B représentent les pixels formant l'image 20, délimités par les lignes horizontales et verticales portant ici des références 52 et 54. La figure 4A représente une première fenêtre 56 d'analyse, définie autour d'un premier pixel 58. La figure 4B représente une seconde fenêtre 60 d'analyse, définie autour d'un second pixel 62. Pour simplifier la figure et la description, la description qui suit est faite dans le cas particulier où les fenêtres 56 et 58 présentent une longueur de trois pixels seulement. Toutefois, comme indiqué ci-dessus, en réalité, la longueur du côté est choisie différemment, de préférence entre 25 et 35 pixels. L'homme du métier sait adapter la description qui suit à une longueur plus grande du côté des fenêtres d'analyse.

Dans cet exemple, les autres fenêtres d'analyse sont définies successivement pour chacun des pixels de l'image 20. Par exemple, on définit ainsi les fenêtres en sélectionnant tour à tour chaque pixel de l'image, puis en définissant une zone de forme carrée et de dimensions de 3x3 pixels autour de ce pixel, dit pixel central.

Pour exclure les pixels situés au bord de l'image, on définit par exemple une zone d'exclusion 64 de pixels pour lesquels on ne souhaite pas estimer de coefficient $H_i$. Ici, cette zone 64 est une bande d'une largeur W qui s'étend depuis la bordure extérieure de l'image 20 vers l'intérieur de l'image 20. Les fenêtres d'analyse sont définies de façon à ce qu'aucune d'entre elles ne présente de pixel central qui soit inclus à l'intérieur de cette zone 64. La largeur W de cette bande est également choisie en fonction de la taille et des dimensions des fenêtres d'analyse. Ici, pour des fenêtres carrées de trois pixels de côté, la largeur W est égale à un pixel. Pour des fenêtres de dimensions différentes, par exemple si l'on utilise que des fenêtres d'analyse de forme carrée et de longueur de côté égale à N pixels, où N est un nombre entier positif non nul, alors la valeur de W est égale à la moitié de la longueur N arrondie à la valeur entière inférieure. De cette façon, il n'est pas possible de définir une fenêtre d'analyse présentant de telles dimensions et qui s'étendrait au moins partiellement à l'extérieur de l'image 20.

Chaque fenêtre d'analyse est identifiée de façon unique par l'indice i. Cet indice i comporte ici les coordonnées du pixel central de la fenêtre dans l'image 20. Ces coordonnées sont typiquement des coordonnées cartésiennes exprimées dans un repère orthonormé ayant pour origine l'un des coins de l'image 20.

Ensuite, lors d'une étape 80 (figure 3), un exposant $H_i$ est estimé automatiquement pour chacune des fenêtres d'analyse définies. Plus précisément, lors de cette étape, on calcule pour chaque fenêtre une valeur estimée $\hat{H}_i$ de l'exposant $H_i$. Par la suite, ici, pour simplifier, on parlera « d'estimation de $H_i$ » pour désigner cette valeur estimée $\hat{H}_i$.

Cette valeur est ici calculée pour le pixel central de cette fenêtre, en fonction des valeurs d'intensité des pixels contenus à l'intérieur de la fenêtre et situés autour de ce pixel central. Ce calcul est ici réalisé au moyen d'une régression linéaire sur le logarithme de variations de texture obtenues à différentes échelles. Par exemple, on utilise la méthode décrite dans le brevet US 5625705 (RECHT), aux colonnes 8 à 11 de ce brevet.

Plus exactement, à l'intérieur de cette fenêtre d'analyse, les pixels se répartissent autour du pixel central. Chacun des pixels de la fenêtre d'analyse se trouve à une distance D du pixel central. La distance D ne peut prendre que certaines valeurs, dites valeurs permises, qui dépendent notamment des dimensions de la fenêtre d'analyse et de la forme des pixels. Ces valeurs permises déterminent ainsi le nombre d'échelles utilisées pour ce filtre.

Les distances D sont mesurées dans le plan de l'image 20, entre les centres géométriques respectifs des pixels. Ici, les pixels de l'image 20 présentent une forme carrée et ont tous les mêmes dimensions. Les pixels de l'image 20 ne diffèrent donc ici les uns des autres que par leur position dans l'image 20 et par leur valeur d'intensité de pixel. Dans cet exemple, pour une fenêtre de dimensions 3x3 et du fait des dimensions des pixels, les valeurs permises des distances D sont 1 et $\sqrt{2}$.

Un exemple d'une façon de calculer la valeur estimée $\hat{H}_i$ dans une fenêtre d'analyse au moyen de ce filtre va maintenant être décrite plus en détails.

D'abord, pour chacune des valeurs des distances D permises dans la fenêtre d'analyse, on détermine parmi les pixels de la fenêtre d'analyse qui sont situés à cette distance D du pixel central, les valeurs d'intensités de pixels minimale et maximale prises par ces pixels.

Ensuite, on calcule la différence Y(D) entre ces valeurs maximale et minimale ainsi déterminées. Cette détermination est réalisée pour chacune des valeurs des distances D permises par les dimensions de la fenêtre. A l'issue de ce calcul, on dispose donc d'autant de valeurs de Y(D) qu'il y a de valeurs permises de la distance D pour cette fenêtre d'analyse. Enfin, la valeur estimée $\hat{H}_i$ pour le pixel central est estimé par régression linéaire de la fonction, présumée linéaire, qui à toute valeur de D associe la valeur Y(D). Cette régression est réalisée à l'aide des valeurs de Y(D) ainsi calculées pour chaque valeur permise de D de cette fenêtre d'analyse.

La sélection des pixels situés à une distance D donnée du pixel central est ici réalisée en superposant un filtre prédéfini sur la fenêtre d'analyse. Le filtre est choisi en fonction de la taille de la fenêtre d'analyse. Ce filtre présente ici une taille identique à celle de la fenêtre d'analyse. Ce filtre est typiquement une image de forme carrée composée de pixels qui ont pour valeurs d'intensités respectives la distance entre ce pixel et le milieu du carré. Ces valeurs correspondent ainsi aux valeurs possibles des distances D pour cette fenêtre d'analyse en référence de laquelle ce filtre est défini. Les distances sont ici définies de la même façon que pour la distance D.

La figure 5 représente un exemple d'un tel filtre, ou masque, pour une fenêtre d'analyse de dimensions 3x3 pixels. Ce filtre est ici une image ayant pour forme un carré de dimensions 3x3 dont le pixel situé au milieu de ce carré présente une valeur 0 et dont les autres pixels ont pour valeur la distance entre ce pixel et le milieu de ce carré, à savoir, 1 et $\sqrt{2}$. Le pixel de valeur 0 de ce filtre est ainsi apte à être superposé au pixel central de la fenêtre d'analyse. Ainsi, pour sélectionner les pixels de la fenêtre d'analyse qui sont situés à la distance $D=\sqrt{2}$ du pixel central, on superpose le filtre sur la fenêtre d'analyse, de sorte à ce que le pixel situé au milieu du carré coïncide avec le pixel central, puis on sélectionne les pixels de la fenêtre d'analyse qui coïncident avec les pixels du filtre présentant la valeur $\sqrt{2}$. On procède de même pour sélectionner les pixels de la fenêtre qui sont situés à la distance $D=1$ du pixel central, sauf que l'on sélectionne cette fois les pixels de la fenêtre d'analyse qui coïncident avec les pixels du filtre présentant la valeur 1.

On comprend donc que la taille choisie pour les fenêtres d'analyse a une incidence sur la précision du calcul de la valeur estimée $\hat{H}_i$, car plus on choisit une fenêtre permettant un nombre élevé de valeurs possibles de D, plus la précision de l'estimation est élevée. Cependant, comme indiqué dans ce qui précède, les dimensions choisies ne doivent pas être trop élevées pour ne pas perdre de l'information sur les fluctuations de texture de l'image 20 à l'échelle locale.

La valeur estimée $\hat{H}_i$ est alors stockée dans un support d'enregistrement d'informations.

Ces opérations sont répétées successivement, pour chaque fenêtre d'analyse définie pour l'image 20. A l'issue de l'étape 80, on dispose d'une estimation de l'exposant $H_i$ pour le pixel central de chaque fenêtre d'analyse de l'image 20. Plus exactement, ici, avec la définition choisie pour les fenêtres d'analyse, on dispose d'une estimation $\hat{H}_i$ de l'exposant $H_i$ pour tous les pixels de l'image 20 à l'exception de ceux de la zone 64.

Ensuite, lors d'une étape 100 (figure 3), les exposants $H_i$ estimés sont combinés entre eux pour calculer la signature caractérisant l'image.

Avantageusement, lors de cette étape 100, les exposants $H_i$ estimés sont discrétisés, ou quantifiés, c'est-à-dire qu'on affecte à chacun d'entre eux une valeur numérique $h_i$ choisie parmi une plage de valeurs préalablement définie. Dans cet exemple, les valeurs permises pour les $h_i$ sont un ensemble de valeurs dans l'intervalle (0,1). Ainsi, à chaque exposant $H_i$ estimé correspond une valeur $h_i$, dite valeur discrète.

Dans cet exemple, les valeurs discrètes $h_i$ sont calculées au moyen d'un test statistique. Par exemple, pour chaque valeur $h_j$ possible de $h_i$, on teste l'hypothèse nulle suivante : « $H_i = h_j$ ». On calcule alors la valeur-p du test statistique, notée $\pi_{i,j}$, à l'aide de la formule suivante :

$$\pi_{i,j} = 2 - 2*\Phi(|\hat{H}_i - h_j|/\sigma(H_i))$$

où $\sigma(H_i)$ est la variance de la distribution de $\hat{H}_i$ et $\Phi$ la distribution de probabilité d'une variable aléatoire gaussienne standard. L'emploi de cette formule est justifiée par le fait que, dans le modèle utilisé, $\hat{H}_i$ est une variable aléatoire gaussienne de variance $\sigma(H_i)$ et qui a pour moyenne statistique la valeur de l'exposant $H_i$.

La valeur $h_j$ qui est retenue comme étant la valeur quantifiée de $H_i$ est celle pour laquelle on a j = argmax$_t[(\pi_{i,t})]$, où :
- « argmax$_t (\pi_{i,t})$ » désigne l'indice j pour lequel le maximum de $\pi_{i,t}$ est réalisé, $h_j$ étant ainsi la valeur discrète la plus proche de la valeur estimée $\hat{H}_i$.

Dans ce qui suit, pour simplifier, on notera désormais $\hat{H}_i$ la valeur estimée discrétisée $h_i$ pour la fenêtre d'indice i.

Ensuite, toujours lors de cette étape 100, une matrice de cooccurrence $M_o$ des valeurs estimées discrétisées des exposants est construite pour l'image 20. Cette matrice $M_o$ représente ici la co-occurrence de valeurs d'exposants $\hat{H}_i$ pour des pixels de l'image 20 séparés par décalage dans l'espace o.

Dans cet exemple, la matrice $M_o$ est construite pour chaque valeur à l'aide de la formule suivante :

$$M_o(m,l) := \sum_i w_{i,i+o}(m,l)$$

où :

- $M_o(m,l)$ est la valeur du coefficient de la m-ième ligne et de la l-ième colonne de la matrice $M_o$ ;
- $w_{i,i+o}$ est une valeur égale à 1 si $\hat{H}_i = h_l$ et si $\hat{H}_{i+o} = h_m$, et nulle dans le cas contraire ;
- o est un paramètre prédéfini de décalage. Ce paramètre o reste constant, quelque soient les valeurs de i, de m et de l. Par exemple, o est un vecteur dont les coordonnées correspondent à un déplacement spatial prédéfini dans le repère de l'image 20.

La sommation est ici effectuée pour toutes les fenêtres d'analyse définies pour l'image 20, chacune de centre géométrique $X_i$ et telles que le point $X_i$, après translation du vecteur o dans le plan de l'image 20, appartienne toujours à l'image 20. Du fait du choix des valeurs possibles pour les $h_i$, la matrice présente ici une taille de n * n ou n est le nombre de valeurs discrètes de h.

Enfin, la signature de l'image est calculée à partir de la matrice $M_o$ ainsi construite. Par exemple, ici, on utilise un des paramètres de Haralick précédemment définis. L'utilisation des paramètres de Haralick permet de réduire les ressources de calcul nécessaires pour calculer la signature. En effet, la matrice $M_o$ peut être difficile à manipuler lors des calculs, car elle peut présenter des dimensions importantes ou encore être une matrice essentiellement creuse (« sparse matrix » en langue anglaise).

Ici, la signature de l'image est le second moment angulaire de la matrice $M_o$, calculé au moyen de la formule suivante : $f_1 = \sum_i \sum_j M(i,j)$.

A l'issue de l'étape 100, on dispose d'une signature de l'image 20, qui caractérise la texture de l'image 20. L'image 20 est alors dite caractérisée.

En procédant de cette manière pour calculer la signature de l'image, on obtient un résultat qui caractérise la texture de l'image globale, tout en prenant en compte des fluctuations locales de la texture de l'image.

Un exemple d'un procédé pour classer automatiquement des images numériques en fonction de leur texture va maintenant être décrit, en référence à l'organigramme de la figure 6 et à l'aide des figures 1 à 5.

Lors d'une étape 200, une pluralité d'images numériques sont acquises, par exemple par le dispositif 2.

Puis, lors d'une étape 202, pour chaque image acquise, une signature caractérisant la texture de cette image est automatiquement calculée, au moyen des étapes 30, 40, 80 et 100 du procédé de caractérisation de la figure 3.

Ensuite, lors d'une étape 204, les images numériques acquises sont classées automatiquement au moyen d'un classificateur, en fonction de la signature de texture calculée pour chacune des images numérique acquises. Ce classificateur (« classifier » en langue anglaise) est par exemple un algorithme de classement à base de réseaux de neurones ou une machine à vecteurs de support (« support vector machine » en langue anglaise). Par exemple, les images acquises présentant une signature dont la valeur excède un seuil prédéfini sont classées comme appartenant à une première catégorie d'images, tandis que les images acquises présentant une signature dont la valeur est inférieure ou égale à ce seuil prédéfini sont classées comme appartenant à une seconde catégorie d'images, distincte de la première catégorie.

De nombreux autres modes de réalisation sont possibles.

L'image 20 peut être différente d'un cliché de mammographie. Le dispositif 2 peut ainsi être utilisé pour des applications telles qu'en géographie, en géologie, en météorologie ou encore en science des matériaux. Par exemple, l'image 20 est une vue aérienne ou par satellite d'un terrain, ou d'une coupe d'un minerai ou d'un matériau, ou encore une image d'un tissu biologique quelconque.

L'image 20 peut être encodée différemment.

Les valeurs d'intensité de pixels peuvent prendre des valeurs différentes. L'image 20 peut être en couleur. Par exemple, l'image 20 est une image en couleurs encodée sur 32 bits.

Les fenêtres d'analyse peuvent être définies différemment. Par exemple, les fenêtre ont une forme rectangulaire, ou même irrégulière.

Les fenêtres d'analyse peuvent présenter un côté de longueur paire. Dans ce cas, comme on ne peut pas définir de pixel central de la même façon que pour une fenêtre de côté de longueur impaire, on définit un centre géométrique de la fenêtre. La suite du procédé est modifiée en conséquence pour tenir compte de ce centre géométrique, notamment en référence aux filtres.

En variante, ces fenêtres ne se chevauchent pas. L'image 20 est par exemple simplement partagée en une pluralité de fenêtres d'analyse contiguës à l'exception, le cas échéant, des pixels de la zone 64 situés sur le bord de l'image 20. Ainsi, il peut exister des pixels de l'image 20 (même hors de la zone 64) pour lesquels on ne dispose pas d'une estimation de l'exposant $\hat{H}_i$ à l'issue de l'étape 80.

Les fenêtres d'analyse ne sont pas forcément contiguës entre elles et il peut ainsi y avoir des zones de l'image qui ne sont incluses dans aucune fenêtre.

Des fenêtres d'analyse de dimensions et/ou de forme différente peuvent être utilisées pour une même image 20. Dans ce cas, le calcul de la signature de l'image 20 comporte l'application d'une correction numérique pour tenir compte de la variation de paramètres statistiques (comme la variance) induite lors de l'estimation des exposants $H_i$ par les différences de forme et/ou de dimensions.

La numérotation des fenêtres peut être réalisée suivant une convention différente.

L'exposant $H_i$ peut être estimé suivant une méthode différente, en particulier lorsque l'image 20 est encodée différemment. Par exemple, l'estimation de $H_i$ est réalisée, à l'intérieur de chaque fenêtre d'analyse, en appliquant la méthode des variations quadratiques décrite dans l'article de Wood et Chan précédemment cité. On peut ainsi se dispenser d'utiliser le filtre de la figure 5. En variante, l'exposant peut être estimé suivant la méthode décrite dans l'article de H. Biermé et al. ; « Central limit theorems and quadratic variations in terms of spectral density » ; Electronic Journal of Probability ; vol. 16, p. 362-395, 2011.

Différentes méthodes d'estimation des exposants $H_i$ peuvent être mises en œuvre d'une fenêtre d'analyse à l'autre pour estimer les exposants $H_i$ respectifs de ces fenêtres. Des différentes fenêtres d'analyse d'une même image peuvent être estimés à l'aide de méthodes différentes.

Les valeurs $h_i$ peuvent être calculées différemment. On peut par exemple utiliser un test statistique différent pour calculer les valeurs $h_i$. Un test gaussien est cependant préférable car les $H_i$ estimés sont en théorie gaussiens. On peut également utiliser une méthode d'optimisation connue. En variante, on peut définir une fonction f continue par morceaux sur l'intervalle [0 ; 1] et qui, à toute valeur comprise dans un intervalle [m/256;(m+1)/256[ associe la valeur m, où m est un entier positif appartenant à l'intervalle [0;255]. On a alors $h_i = f(\hat{H}_i)$.

Les exposants $H_i$ estimés peuvent être combinés différemment. Par exemple, lors d'une étape 100' remplaçant l'étape 100, les exposants $H_i$ sont combinés de telle sorte que la signature soit issue d'au moins un moment statistique d'ordre n de la distribution des exposants $H_i$ estimés, où n est un nombre entier strictement positif. Par exemple, la signature est la moyenne statistique $\mu$ des exposants $H_i$ estimés pour chacune des fenêtres d'analyse. Les moments d'ordre n peuvent également inclure :

- la variance : $s^2 = \sum_{i=1\ldots M} w_i^*(H_i - \mu)^2$
- l'asymétrie (« skewness » en langue anglaise) : $sk = \sum_{i=1\ldots M} w_i^*(H_i - \mu)^{3*}1/s^3$
- le kurtosis : $\kappa = \sum_{i=1\ldots M} w_i^*(H_i - \mu)^{4*}(1/s^4) - 3$

où $w_i$ est un coefficient de pondération par exemple choisi égal à 1/M, M étant le nombre total de fenêtre d'analyse définies.

Une autre façon de combiner les exposants $H_i$ estimés pour obtenir une signature de l'image est d'utiliser un test statistique d'homogénéité sur un paramètre statistique défini à partir des erreurs associées à l'estimation des exposants $\hat{H}_i$ pour chaque fenêtre et de l'erreur associée à l'estimation d'un indice de Hurst H de l'image entière. Par exemple, on prend comme hypothèse que la régularité de la texture est homogène. On définit le paramètre statistique K*F avec :

$$F = [\, err_g - \Sigma_i\, (err_i)^2]/[\Sigma_i\, (err_i)^2]\,,$$

où

- « $err_i$ » est l'erreur du modèle associée à l'estimation de $\hat{H}_i$ pour la i-ième fenêtre ;
- « $err_g$ » est l'erreur du modèle associée à l'estimation de l'indice de Hurst pour l'image entière, c'est-à-dire sans découper l'image en plusieurs fenêtres ;

$$K = [N_f^*N_e - 2^*N_f]/[2^*N_f - 2]\,,$$

où

- Nf est le nombre de fenêtres d'analyse définies, et
- $N_e$ est le nombre d'échelles utilisées lors de l'estimation des $H_i$. Dans cet exemple, il s'agit du nombre d'échelles où sont observées les différences de niveau de gris pour chaque fenêtre.

L'estimation de l'indice de Hurst pour l'image entière est par exemple calculée en utilisant le même algorithme que celui utilisé pour calculer les estimations de $\hat{H}_i$ mais en utilisant qu'une seule fenêtre de la taille de l'image.

L'erreur d'un modèle exprime ici l'écart entre des données mesurées et des données correspondantes prédites par le modèle. Il s'agit par exemple de l'erreur au sens des moindres carrés, par exemple définie comme la somme des carrés des différences entre valeur mesuré et valeur prédite. Dans cet exemple, l'erreur réalisée lors de l'étape 80 est l'erreur effectuée lors de la régression linéaire de la fonction qui à D associe la valeur Y(D).

On suppose ensuite que la statistique K*F suit une loi statistique de Fisher de paramètres 2*$N_f$-2 et $N_f$ * $N_e$-2*$N_f$ lorsque la texture est de régularité homogène.

On calcule la valeur-p de ce test, qui est égale à la valeur U telle que donnée par la formule U = 1-P(G<K*F) où :

- G est une variable aléatoire suivant une loi de Fisher de paramètres 2*$N_f$ -2 et $N_f$*$N_e$-2*$N_f$ ;
- P(G<K*F) est la probabilité que la valeur de G soit inférieure à la valeur de K*F.

Cette valeur U est comprise dans un intervalle [0;1] et est proche de 1 lorsque la texture présente une régularité homogène et proche de 0 lorsque la texture ne présente pas une régularité homogène. La valeur U est ainsi la signature de l'image.

Ainsi, à cet effet, l'étape 100 est remplacée par une étape 100" comportant :

- l'estimation d'un indice de Hurst H pour l'image 20 entière ;
- le calcul du paramètre K*F, à partir notamment des erreurs obtenues lors des estimations des paramètres H et $H_i$ ;
- le calcul de la valeur-p du test statistique d'homogénéité pour obtenir la signature de l'image.

En modifiant la façon de combiner les exposants $H_i$ estimés, différentes signatures peuvent être calculées pour une même image. Par exemple, on peut obtenir différentes signatures pour la même image en utilisant différents paramètres de Haralick lors de l'étape 100 ou différents moments lors de l'étape 100'. Les différentes signatures obtenues pour la même image peuvent alors être simultanément utilisées pour la classer par rapport à d'autres images.

Le procédé de classement des images peut être différent. D'autres classificateurs peuvent être utilisés. Ces classificateurs peuvent en outre être configurés pour classer les images en fonction d'une combinaison de signatures.

**Revendications**

1. Procédé de caractérisation automatique de la texture d'une image numérique, **caractérisé en ce que** ce procédé comporte :

   - l'acquisition (30) d'une image numérique formée d'une pluralité de pixels ;
   - la définition (40), au sein de l'image numérique acquise, d'une pluralité de fenêtres d'analyse différentes, chaque fenêtre étant formée de pixels de l'image numérique ;
   - l'estimation (80), pour chaque fenêtre définie, d'un exposant de Hurst $H_i$ à partir des seuls pixels de cette fenêtre, où l'indice i identifie de façon unique la fenêtre d'analyse utilisée pour estimer l'exposant $H_i$, cette estimation de l'exposant de Hurst $H_i$ pour chaque fenêtre d'analyse (56) comporte des opérations de calcul entre des valeurs :

      - du pixel, dit central (58), de ladite fenêtre d'analyse situé au centre géométrique de ladite fenêtre d'analyse, et
      - des autres pixels contenus dans ladite fenêtre d'analyse, lesdits autres pixels étant situés à des distances différentes du pixel central;

   - le calcul (100, 100', 100") d'une signature, sous la forme d'une seule valeur numérique, caractéristique de la texture de l'image numérique, en combinant les exposants $H_i$ estimés pour chaque fenêtre de l'image numérique,

   et **en ce que** :

   - le procédé comporte le calcul d'une valeur discrète $h_i$ de chaque exposant $H_i$, ce calcul étant réalisé au moyen d'une même fonction f prédéterminée prenant pour argument l'exposant $H_i$, cette fonction f associant, pour chaque valeur possible que peut prendre un exposant de Hurst, une unique valeur discrète comprise entre deux valeurs entières positives A et B prédéterminées ;
   - la combinaison (100) des exposants $H_i$ comporte la construction d'une matrice de cooccurrence $M_o$ à l'aide de la formule suivante :

$$M_o(m,l) = \sum_i w_{i,i+o}(m,l)$$

   où :

      - $M_o(m,l)$ est la valeur du coefficient de la m-ième ligne et de la l-ième colonne de la

matrice $M_o$,
- $w_{i,i+o}$ est une valeur numérique égale à 1 si $H_i = h_l$ et $H_{i+o} = h_m$ et égale à zéro dans le cas contraire, $h_l$ et $h_m$ étant les valeurs discrètes des exposants $H_i$ estimés pour, respectivement, des valeurs d'indices $i = l$ et $i = m$, la sommation étant effectuée pour toutes les fenêtres d'analyse de l'image de centre géométrique $X_i$ telles que le point $X_i$, après translation d'un vecteur o dans le plan de l'image, appartienne toujours à l'image, o étant un paramètre prédéfini constant quelque soient les valeurs de i, m et l.

2. Procédé selon la revendication 1, dans lequel la signature est choisie parmi l'ensemble formé par les paramètres de Haralick associés à la matrice de cooccurrence $M_o$ calculée.

3. Procédé selon l'une quelconque des revendications précédentes, dans lequel les pixels de l'image contenus à l'intérieur des fenêtres d'analyses représentent au moins 90 % de tous les pixels de l'image numérique.

4. Procédé selon l'une quelconque des revendications précédentes, dans lequel les fenêtres d'analyse définies sont de forme et de dimensions identiques les unes aux autres.

5. Procédé selon l'une quelconque des revendications précédentes, dans lequel les fenêtres d'analyse définies sont toutes disjointes les unes des autres.

6. Procédé selon l'une quelconque des revendications précédentes, dans lequel les fenêtres d'analyse définies présentent chacune une forme carrée.

7. Procédé selon l'une quelconque des revendications précédentes, dans laquelle les fenêtres d'analyse présentent une forme de quadrilatère régulier dont les côtés ont une longueur comprise entre 15 pixels et 50 pixels.

8. Procédé de classement automatique d'images numériques en fonction de leur texture, **caractérisé en ce que** ce procédé comporte :

    - l'acquisition (200) d'une pluralité d'images numériques formées chacune d'une pluralité de pixels ;
    - la caractérisation (202) automatique de la texture de chacune des images numériques acquises, au moyen d'un procédé conforme à l'une quelconque des revendications précédentes, cette caractérisation ayant pour résultat le calcul d'une signature caractéristique de la texture pour chaque image ;

    - le classement (204) des images numériques acquises, au moyen d'un classificateur automatique en fonction, pour chaque image, de la signature de texture calculée.

9. Support d'enregistrement d'informations (4), **caractérisé en ce qu'**il comporte des instructions pour l'exécution d'un procédé conforme à l'une quelconque des revendications précédentes lorsque ces instructions sont exécutées par un calculateur électronique.

10. Calculateur électronique (6) pour la mise en œuvre d'un procédé conforme à l'une quelconque des revendications 1 à 7, **caractérisé en ce que** ce calculateur est programmé pour :

    - acquérir une image numérique formée d'une pluralité de pixels ;
    - définir, au sein de l'image numérique acquise, une pluralité de fenêtres d'analyse différentes, chaque fenêtre étant formée de pixels de l'image numérique ;
    - estimer, pour chaque fenêtre définie, un coefficient de Hurst $H_i$, à partir des seuls pixels de cette fenêtre, où l'indice i identifie de façon unique la fenêtre d'analyse utilisée pour estimer l'exposant $H_i$, cette estimation de l'exposant de Hurst $H_i$ pour chaque fenêtre d'analyse (56) comportant des opérations de calcul entre des valeurs :

        - du pixel, dit central (58), de ladite fenêtre d'analyse situé au centre géométrique de ladite fenêtre d'analyse, et
        - des autres pixels contenus dans ladite fenêtre d'analyse, lesdits autres pixels étant situés à des distances différentes du pixel central ;

    - calculer automatiquement une signature, sous la forme d'une seule valeur numérique, caractéristique de la texture de l'image numérique, en combinant les exposants $H_i$ estimés pour chaque fenêtre de l'image numérique,

    et **en ce que** :

    - le calculateur est également programmé pour calculer une valeur discrète $h_i$ de chaque exposant $H_i$, ce calcul étant réalisé au moyen d'une même fonction f prédéterminée prenant pour argument l'exposant $H_i$, cette fonction f associant, pour chaque valeur possible que peut prendre un exposant de Hurst, une unique valeur discrète comprise entre deux valeurs entières positives A et B prédéterminées ;
    - le calcul automatique de la signature en combinant les exposants de Hurst $H_i$ comporte la combinaison des exposants $H_i$ en construisant une matrice de cooccurrence $M_o$ à l'aide de la formule suivante :

$$M_o(m,l) = \sum_i w_{i,i+o}(m,l)$$

où :

- $M_o(m,l)$ est la valeur du coefficient de la m-ième ligne et de la l-ième colonne de la matrice $M_o$,
- $w_{i,i+o}$ est une valeur numérique égale à 1 si $H_i = h_l$ et $H_{i+o} = h_m$ et égale à zéro dans le cas contraire, $h_l$ et $h_m$ étant les valeurs discrètes des exposants $H_i$ estimés pour, respectivement, des valeurs d'indices i = l et i = m, la sommation étant effectuée pour toutes les fenêtres d'analyse de l'image de centre géométrique $X_i$ telles que le point $X_i$, après translation d'un vecteur o dans le plan de l'image, appartienne toujours à l'image, o étant un paramètre prédéfini constant quelque soient les valeurs de i, m et l.

## Patentansprüche

1. Verfahren zur automatischen Charakterisierung der Textur eines digitalen Bildes, **dadurch gekennzeichnet, dass** das Verfahren umfasst:

   - die Erfassung (30) eines digitalen Bildes, das von mehreren Pixeln gebildet wird;
   - die Definition (40), innerhalb des erfassten digitalen Bildes, mehrerer verschiedener Analysefenster, wobei jedes Fenster von Pixeln des digitalen Bildes gebildet wird;
   - die Schätzung (80), für jedes definierte Fenster, eines Hurst-Exponenten $H_i$ anhand nur der Pixel dieses Fensters, wobei der Index i auf eindeutige Weise das Analysefenster identifiziert, das zum Schätzen des Exponenten $H_i$ verwendet wird, wobei diese Schätzung des Hurst-Exponenten $H_i$ für jedes Analysefenster (56) Rechenoperationen umfasst zwischen Werten:

      - des sogenannten mittleren Pixels (58) des Analysefensters, das sich in der geometrischen Mitte des Analysefensters befindet, und
      - der anderen in dem Analysefenster enthaltenen Pixel, wobei sich diese anderen Pixel in verschiedenen Abständen von dem mittleren Pixel befinden;

   - die Berechnung (100, 100', 100") einer Signatur in der Form eines einzigen numerischen Wertes, der für die Textur des digitalen Bildes charakteristisch ist, durch Kombinieren der geschätzten Exponenten $H_i$ für jedes Fenster des digitalen Bildes,

   und dadurch, dass:

   - das Verfahren die Berechnung eines diskreten Wertes $h_i$ jedes Exponenten $H_i$ umfasst, wobei diese Berechnung mittels ein und derselben vorbestimmten Funktion f mit dem Exponenten $H_i$ als Argument durchgeführt wird, wobei diese Funktion f für jeden möglichen Wert, den ein Hurst-Exponent annehmen kann, einen eindeutigen diskreten Wert zuordnet, der zwischen zwei vorbestimmten positiven ganzen Werten A und B liegt;
   - die Kombination (100) der Exponenten $H_i$ die Konstruktion einer Grauwertematrix $M_o$ mithilfe der folgenden Formel umfasst:

   $$M_o(m,l) = \sum_i w_{i,i+o}(m,l)$$

   wobei:

      - $M_o(m,l)$ der Wert des Koeffizienten der m-ten Zeile und der l-ten Spalte der Matrix $M_o$ ist,
      - $w_{i,i+o}$ ein numerischer Wert ist, der gleich 1 ist, falls $H_i = h_l$ und $H_{i+o} = h_m$ ist, und andernfalls gleich null ist, wobei $h_l$ und $h_m$ die diskreten Werte der Exponenten $H_i$ sind, die für Werte von Indizes i = l bzw. i = m geschätzt wurden, wobei die Summenbildung für alle solchen Analysefenster des Bildes mit dem geometrischen Mittelpunkt $X_i$ durchgeführt wird, für die der Punkt $X_i$ nach Translation um einen Vektor o in der Ebene des Bildes noch immer zu dem Bild gehört, wobei o ein vordefinierter Parameter ist, der konstant ist, unabhängig von den Werten von i, m und l.

2. Verfahren nach Anspruch 1, wobei die Signatur aus der Menge gewählt wird, die von den Haralick-Parametern gebildet wird, die der berechneten Grauwertematrix $M_o$ zugeordnet sind.

3. Verfahren nach einem der vorhergehenden Ansprüche, wobei die im Inneren der Analysefenster enthaltenen Pixel des Bildes wenigstens 90 % aller Pixel des digitalen Bildes repräsentieren.

4. Verfahren nach einem der vorhergehenden Ansprüche, wobei die definierten Analysefenster eine Form und Abmessungen aufweisen, die miteinander identisch sind.

5. Verfahren nach einem der vorhergehenden Ansprüche, wobei die definierten Analysefenster alle zueinander disjunkt sind.

6. Verfahren nach einem der vorhergehenden Ansprüche, wobei die definierten Analysefenster jeweils eine quadratische Form aufweisen.

7. Verfahren nach einem der vorhergehenden Ansprüche, wobei die Analysefenster eine Form eines regelmäßigen Vierecks aufweisen, dessen Seiten eine Länge zwischen 15 Pixeln und 50 Pixeln haben.

8. Verfahren zur automatischen Klassifizierung digitaler Bilder in Abhängigkeit von ihrer Textur, **dadurch gekennzeichnet, dass** das Verfahren umfasst:

     - die Erfassung (200) mehrerer digitaler Bilder, die jeweils von mehreren Pixeln gebildet werden;
     - die automatische Charakterisierung (202) der Textur jedes der erfassten digitalen Bilder mittels eines Verfahrens gemäß einem der vorhergehenden Ansprüche, wobei diese Charakterisierung die Berechnung einer für die Textur charakteristischen Signatur für jedes Bild zum Ergebnis hat;
     - die Klassifizierung (204) der erfassten digitalen Bilder mittels eines automatischen Klassifikators in Abhängigkeit, für jedes Bild, von der berechneten Signatur der Textur.

9. Informationsaufzeichnungsmedium (4), **dadurch gekennzeichnet, dass** es Anweisungen zur Ausführung eines Verfahrens gemäß einem der vorhergehenden Ansprüche, wenn diese Anweisungen von einem elektronischen Rechner ausgeführt werden, umfasst.

10. Elektronischer Rechner (6) zur Durchführung eines Verfahrens gemäß einem der Ansprüche 1 bis 7, **dadurch gekennzeichnet, dass** dieser Rechner dafür programmiert ist:

     - ein digitales Bild zu erfassen, das von mehreren Pixeln gebildet wird;
     - innerhalb des erfassten digitalen Bildes mehrere verschiedene Analysefenster zu definieren, wobei jedes Fenster von Pixeln des digitalen Bildes gebildet wird;
     - für jedes definierte Fenster einen Hurst-Exponenten $H_i$ anhand nur der Pixel dieses Fensters zu schätzen, wobei der Index i auf eindeutige Weise das Analysefenster identifiziert, das zum

Schätzen des Exponenten $H_i$ verwendet wird, wobei diese Schätzung des Hurst-Exponenten $H_i$ für jedes Analysefenster (56) Rechenoperationen umfasst zwischen Werten:

     - des sogenannten mittleren Pixels (58) des Analysefensters, das sich in der geometrischen Mitte des Analysefensters befindet, und
     - der anderen in dem Analysefenster enthaltenen Pixel, wobei sich diese anderen Pixel in verschiedenen Abständen von dem mittleren Pixel befinden;

- automatisch eine Signatur in der Form eines einzigen numerischen Wertes, der für die Textur des digitalen Bildes charakteristisch ist, durch Kombinieren der geschätzten Exponenten $H_i$ für jedes Fenster des digitalen Bildes zu berechnen, und dadurch, dass:

     - der Rechner außerdem dafür programmiert ist, einen diskreten Wert $h_i$ jedes Exponenten $H_i$ zu berechnen, wobei diese Berechnung mittels ein und derselben vorbestimmten Funktion f mit dem Exponenten $H_i$ als Argument durchgeführt wird, wobei diese Funktion f für jeden möglichen Wert, den ein Hurst-Exponent annehmen kann, einen eindeutigen diskreten Wert zuordnet, der zwischen zwei vorbestimmten positiven ganzen Werten A und B liegt;
     - die automatische Berechnung der Signatur durch Kombinieren der Hurst-Exponenten $H_i$ die Kombination der Exponenten $H_i$ durch Konstruieren einer Grauwertematrix $M_o$ mithilfe der folgenden Formel umfasst:

$$M_o(m,l) = \sum_i w_{i,i+o}(m,l)$$

wobei:

     - $M_o(m,l)$ der Wert des Koeffizienten der m-ten Zeile und der l-ten Spalte der Matrix $M_o$ ist,
     - $w_{i,i+o}$ ein numerischer Wert ist, der gleich 1 ist, falls $H_i = h_l$ und $H_{i+o} = h_m$ ist, und andernfalls gleich null ist, wobei $h_l$ und $h_m$ die diskreten Werte der Exponenten $H_i$ sind, die für Werte von Indizes i = l bzw. i = m geschätzt wurden, wobei die Summenbildung für alle solchen Analysefenster des Bildes mit dem geometrischen Mittelpunkt $X_i$ durchgeführt wird, für die der Punkt $X_i$ nach Translation um einen Vektor o in der Ebene des Bildes noch immer zu dem Bild gehört, wobei o ein vordefinierter Parameter ist, der konstant ist, unabhängig von den Werten von i, m und l.

## Claims

1. Method for automatically characterizing the texture of a digital image, **characterized in that** this method comprises:

   - acquiring (30) a digital image formed from a plurality of pixels;
   - defining (40), within the acquired digital image, a plurality of different analysis windows, each window being formed from pixels of the digital image;
   - estimating (80), for each defined window, a Hurst exponent $H_i$ from the pixels of this window alone, where the index i uniquely identifies the analysis window used to estimate the exponent $H_i$, this estimation of the Hurst exponent $H_i$ for each analysis window (56) comprising computing operations carried out between values:

      - of the so-called central pixel (58) of said analysis window, which pixel is located at the geometric centre of said analysis window, and
      - of other pixels contained in said analysis window, said other pixels being located at different distances from the central pixel;

   - computing (100, 100', 100") a signature, taking the form of a single numerical value, characteristic of the texture of the digital image, by combining the exponents $H_i$ estimated for each window of the digital image,

   and **in that**:

   - the method comprises computing a discrete value $h_i$ of each exponent $H_i$, this computation being carried out by means of a given predetermined function f having as argument the exponent $H_i$, this function f associating, for each possible value that a Hurst exponent is able to take, a single discrete value comprised between two predetermined positive integer values A and B;
   - the combination (100) of the exponents $H_i$ comprises constructing a co-occurrence matrix $M_o$ using the following formula:

   $$M_o(m,l) = \sum_l w_{i,i+o}(m,l)$$

   where:

      - $M_o(m,l)$ is the value of the coefficient of the mth row and of the lth column of the matrix $M_o$,
      - $w_{i,i+o}$ is a numerical value equal to 1 if $H_i = h_l$ and $H_{i+o} = h_m$ and equal to zero in the contrary case, $h_l$ and $h_m$ being the discrete values of the exponents $H_i$ estimated for index values i = l and i = m, respectively, the summation being carried out for all the analysis windows of the image of geometric centre $X_i$ that are such that the point $X_i$, after translation by a vector o in the plane of the image, still belongs to the image, o being a predefined parameter that is constant whatever the values of i, m and l.

2. Method according to Claim 1, wherein the signature is chosen from the set formed by the Haralick features associated with the computed co-occurrence matrix $M_o$.

3. Method according to either one of the preceding claims, wherein the pixels of the image that are contained inside the analysis windows represent at least 90% of all the pixels of the digital image.

4. Method according to any one of the preceding claims, wherein the defined analysis windows are of identical shape and size to one another.

5. Method according to any one of the preceding claims, wherein the defined analysis windows are all separate from one another.

6. Method according to any one of the preceding claims, wherein the defined analysis windows each have a square shape.

7. Method according to any one of the preceding claims, wherein the analysis windows have a regular quadrilateral shape the sides of which have a length comprised between 15 pixels and 50 pixels.

8. Method for automatically classifying digital images depending on their texture, **characterized in that** this method comprises:

   - acquiring (200) a plurality of digital images each formed from a plurality of pixels;
   - automatically characterizing (202) the texture of each of the acquired digital images, by means of a method according to any one of the preceding claims, the result of this characterization being the computation, for each image, of a signature characteristic of the texture;
   - classifying (204) the acquired digital images, by means of an automatic classifier, depending, for each image, on the computed texture signature.

9. Data storage medium (4), **characterized in that** it comprises instructions for executing a method according to any one of the preceding claims when these instructions are executed by an electronic computer.

10. Electronic computer (6) for implementing a method according to any one of Claims 1 to 7, **characterized in that** this computer is programmed to:

- acquire a digital image formed from a plurality of pixels;
- define, within the acquired digital image, a plurality of different analysis windows, each window being formed from pixels of the digital image;
- estimate, for each defined window, a Hurst coefficient $H_i$ from the pixels of this window alone, where the index i uniquely identifies the analysis window used to estimate the exponent $H_i$, this estimation of the Hurst exponent $H_i$ for each analysis window (56) comprising computing operations carried out between values:

  - of the so-called central pixel (58) of said analysis window, which pixel is located at the geometric centre of said analysis window, and
  - of other pixels contained in said analysis window, said other pixels being located at different distances from the central pixel;

- automatically computing a signature, taking the form of a single numerical value, characteristic of the texture of the digital image, by combining the exponents $H_i$ estimated for each window of the digital image,

and **in that**:

- the computer is also programmed to compute a discrete value $h_i$ of each exponent $H_i$, this computation being carried out by means of a given predetermined function f having as argument the exponent $H_i$, this function f associating, for each possible value that a Hurst exponent is able to take, a single discrete value comprised between two predetermined positive integer values A and B;
- the automatic computation of the signature by combining the Hurst exponents $H_i$ comprises combining the exponents $H_i$ by constructing a co-occurrence matrix $M_o$ using the following formula:

$$M_o(m,l) = \sum_l w_{i,i+o}(m,l)$$

where:

- $M_o(m,l)$ is the value of the coefficient of the mth row and of the lth column of the matrix $M_o$,
- $w_{i,i+o}$ is a numerical value equal to 1 if $H_i = h_l$ and $H_{i+o} = h_m$ and equal to zero in the contrary case, $h_l$ and $h_m$ being the discrete values of the exponents $H_i$ estimated for index values i = l and i = m, respectively, the summation being carried out for all the analysis windows of the image of geometric centre $X_i$ that are such that the point $X_i$, after translation by a vector o in the plane of the image, still belongs to the image, o being a predefined parameter that is constant whatever the values of i, m and l.

Fig. 1

Fig. 2

Fig. 3

Fig. 4A

Fig. 4B

| $\sqrt{2}$ | 1 | $\sqrt{2}$ |
|---|---|---|
| 1 | 0 | 1 |
| $\sqrt{2}$ | 1 | $\sqrt{2}$ |

Fig. 5

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5859919 A, Holland Orgal T
- US 5625705 A, RECHT

**Littérature non-brevet citée dans la description**

- Increment-based estimators of fractal dimension for two-dimensional surface data. *Statistica Sinica,* 2000, vol. 10, 343-376
- **XU Y. et al.** MDCT-based 3D texture classification of emphysema and early smoking related lung pathologies. *IEEE Trans. on Médical Imaging,* Avril 2006, vol. 25, 464-475
- **RENUKA UPPALURI et al.** Fractal analysis of high-resolution CT images as a tool for quantification of lung diseases. *Proc. of SPIE,* Mai 1995, vol. 2433, 133-142
- **CHI-CHANG CHEN et al.** Fractal feature analsis and classification in médical imaging. *IEEE Transactions on Médical Imaging,* 1989, vol. 8 (2), 133-142
- Texture analysis of mammograms using the two-dimensional Hurst operator. **CHANDRASEKHAR R. et al.** Digital Signal Processing Proceedings. IEEE, Juillet 1977, vol. 1, 97-100
- **ROBERT M. HARALICK et al.** Textural features for image classification. *IEEE Transactions on Systems, Man and Cybernetics,* Novembre 1973, vol. SMC-3 (6), 610-621
- Anisotropic analysis of some gaussian models. **A. BONAMI et al.** Journal of Fourier Analysis and Applications. Springer, 2003, vol. 9, 215-213
- **H. BIERMÉ et al.** Central limit theorems and quadratic variations in terms of spectral density. *Electronic Journal of Probability,* 2011, vol. 16, 362-395